# EUROPÄISCHE PATENTSCHRIFT

(11) **EP 2 390 543 B1**
(45) Veröffentlichungstag und Bekanntmachung des Hinweises auf die Patenterteilung: **15.06.2016**
(21) Anmeldenummer: 11167590.6
(22) Anmeldetag: 26.05.2011
(51) Int. Cl.: F16L 1/036, F16L 1/06

(54) **Verfahren zur Verlegung von Rohren**
Method for laying pipes
Procédé de pose de tuyaux

(30) Priorität: 27.05.2010 DE 102010029381
(43) Veröffentlichungstag der Anmeldung: 30.11.2011
(73) Patentinhaber: Forschungsinstitut für Flüssigboden GmbH privatwirtschaftliches Unternehmen, 04318 Leipzig (DE)
(72) Erfinder: Stolzenburg, Olaf, 67240 Bischwiller (FR)
(74) Vertreter: Kailuweit & Uhlemann Patentanwälte Partnerschaft mbB

(56) Entgegenhaltungen:
- DE-A1- 3 204 410
- DE-A1-102006 007 820
- DE-A1-102006 013 410
- DE-B4-102005 056 568
- US-A- 5 145 290
- US-B1- 6 318 952

## Beschreibung

Die Erfindung betrifft ein Verfahren zur Rohrverlegung, insbesondere von Wasser- und Abwasserrohren in Gräben mit erhöhtem Grundwasserspiegel oder in mechanisch nicht tragfähigen Böden.

Rohre, insbesondere Wasser- und Abwasserrohre werden regelmäßig in Rohrgräben verlegt. Um die notwendige Aushubmenge des zu entfernenden Bodens zu minimieren, können die Rohre vorzugsweise in schmalen Gräben, zum Teil mehrlagig fluchtend übereinander oder seitlich versetzt in Stufengräben verlegt werden. Zur Nivellierung des zu verlegenden Rohres im Kanal werden nach bisherigem Stand der Technik mechanische Auflagen oder Anschüttungen von Bodenaushub oder Fremdmaterial z.B. Sand verwendet. Dabei wird die vollständige Sohle des Rohrgrabens nivelliert und der Boden verdichtet, um eine genaue Positionierung und Montage der Rohre zu ermöglichen.

Bei der Verlegung von Rohren im Einzugsgebiet von Grundwasser kommt erschwerend hinzu, dass zur Umsetzung oben beschriebenen Technologie ein festes und trockenes Auflager geschaffen und dafür die Baugrube bzw. der Rohrgraben trocken gelegt werden muss. Will man im Grundwasser oder gar unter dem Grundwasserspiegel Rohre einbauen, insbesondere auf für die herkömmliche Technologie nicht ausreichend tragfähigen Untergründen, kommt erschwerend hinzu, dass die genaue Lage und Position der zu verlegenden Rohre visuell nicht oder nur eingeschränkt wahrnehmbar ist. Bisher wurden in solchen Fällen die Rohre durch Taucher und unter Einsatz von umfangreichen Sonderkonstruktionen eingebaut. Hinzu tritt, dass durch das Grundwasser die nicht mit Wasser gefüllten Rohre aufgeschwemmt werden können und dabei ihre Lage und Position verändern. Insbesondere bei Baustellen mit sehr hohem Grundwasserspiegel und anstehenden Böden mit hoher Wasserdurchlässigkeit, wie zum Beispiel in der Nähe von Gewässern oder Häfen, müssen die Rohre meist vollständig unterhalb des Grundwasserspiegels verlegt werden. Beim Einsatz der bekannten, herkömmlichen Einbautechnologien muss eine wasserdichte Baugrube mit einem festen, setzungsfreien Auflager unter meist sehr hohem Aufwand und mit sehr geringem Baufortschritt, beispielsweise durch den Einsatz von wasserdichten Spundwänden und einer Betonsohle, geschaffen werden.
Eine Alternative stellt die DE 3204 410 A1 dar, die mit einem vergleichsweise hohem technischen Aufwand bei der Umsetzung und mit ebenfalls sehr hohem Aufwand und Fehlerrisiko bei der Positionierung und Ausrichtung der Rohrabschnitte auf Grund der vorgeschlagenen mechanischen Hilfsmittel (Aufhängeelemente in Form von Seilanordnungen) verbunden ist. Ebenfalls nicht gelöst wird durch diese Entwicklung das Problem des Bauens auf bei herkömmlicher Bauweise nicht tragfähigen Untergründen, da diese eine entsprechend geringe Dichte und Plastizität aufweisen und Bereiche, die mit hydraulisch abbindenden Materialien wie z.B. Beton verfüllt werden, infolge des Schwindens derartiger Materialien den Verbund mit der Grabenwand verlieren und damit die gesamte Last des Verfüllbereiches allein auf die Grabensohle einwirkt. So kann eine dauerhaft sichere Lage der eingebauten Rohre nicht garantiert werden und die so eingebauten Rohre versinken schrittweise im Untergrund. Bei Einsatz von Verfüllmateriaien höherer Dichte als der des Untergrundes, wie z.B. bei Einsatz des vorgeschlagenen Betons, wird dieser Effekt des Versinkens noch verstärkt. Wird, wie in der DE 3204 410 A1 vorgeschlagen, dann auch noch Sand oder Kies als Verfüllmaterial im Bereich unter der Grund- bzw. Wasseroberfläche eingesetzt, so ist auch hier infolge des Dichteunterschiedes mit dem Versinken der Rohre im Untergrund und selbst bei tragfähigen Untergründen mit Ausspülungen und damit mit Setzungen zu rechnen. Die notwendige, dauerhaft stabile und vor allem sichere Positionierung von Rohren oder anderen Einbauteilen auf bei herkömmlicher Technologie nicht tragfähigen Untergründen ist mit der Lösung nach der DE 3204 410 A1 nicht möglich.

Dieses bautechnische Problem soll die nachfolgend geschilderte Entwicklung qualitativ höchstwertig, technisch korrekt und dennoch deutlich kostengünstiger gelöst werden, als es bisher mit dem bekannten Stand der Technik möglich war.

Aus dem Stand der Technik sind sogenannte Rohrverlegehilfen bekannt, mit deren Hilfe Rohre in Stahlseilen im Graben aufgehängt, durch mechanische Stempel oder andere geeignete Mittel im Zusammenspiel mit den Aufhängungen in der gewünschten Lage positioniert und während des Einbauvorganges von fließfähigen Verfüllbaustoffen wie Flüssigboden in dieser Position stabil gehalten werden. Diese Lösungen sehen den Einsatz von Lasernivelliervorrichtungen vor, die im Rohr angeordnet werden und entlang oder parallel zu dessen Achse einen Bezugspunkt, einen Spiegel oder andere geeignete Hilfsmittel anvisieren. Diese Vorgehensweise erfordert in der Regel die Anwesenheit von Personen im Graben oder zumindest einen wasserfreien Rohrgraben mit in beiden Fällen stabilem, standfestem Untergrund.

Aufgabe der Erfindung ist es, ein Verfahren zur Rohrverlegung in Gräben vorzuschlagen, die ganz oder teilweise mit Wasser gefüllt und/oder deren Untergründe instabil sind und nicht über die notwendige Tragfähigkeit verfügen, um eine dauerhaft stabile Einbauposition der einzubauenden Abwasserrohre unter den beschriebenen Einbaubedingungen zu sichern. Das innovative Verfahren soll eine sichere und zuverlässige Verlegung der Rohre unter den genannten erschwerten Bedingungen ermöglichen.

Die Aufgabe wird gelöst mit den Merkmalen des kennzeichnenden Teils des Hauptanspruchs. Vorzugsweise Weiterbildungen der Erfindung sind Gegenstand rückbezogener Unteransprüche.

Das erfindungsgemäße Verfahren zur Verlegung von Rohren und/oder Leitungen in Rohrgräben auf mechanisch nicht tragfähigen Böden und/oder in teilweise oder vollständig unter Wasser stehenden ist dadurch gekennzeichnet, dass die Rohre unter Einsatz mechanischer Verlegetechnik in ihrer Einbaulage positioniert werden und die zu ihrer Positionierung genutzten Verlegetechnik und/oder das zu verlegende Rohr und/oder das zu seiner Verlegung verwendete technische Hilfsmittel oder. Werkzeug selbst einen Fluchtungsaufsatz aufweist, der über die vorhandene Wasseroberfläche hinausragt und der die Lage des Rohres im Graben in Relation zum nächstliegenden, bereits in seiner Lage fixierten Rohr angibt, wobei die Rohre aufgrund der Angaben des Fluchtungsaufsatzes in ihrer endgültigen Einbauposition fixiert werden und der Graben anschließend mit zeitweise fließfähigen Verfüllbaustoffen, vorzugsweise Flüssigboden nach DE 10 2005 056 568 B4 oder nach DE 10 2004 023 482 B4 verfüllt wird, der das Wasser um die Rohre verdrängt und diese einschließt.
Bei problematischen Untergründen, die oft nicht über die, für die herkömmliche Einbautechnologie benötigte Tragfähigkeit verfügen, kann das Verfahren dadurch verbessert werden, dass die Materialeigenschaften des eingesetzten Flüssigbodens nach DE 10 2005 056 568 B4 oder nach DE 10 2004 023 482 B4 wie z. B. Dichte, Volumenkonstanz, Viskosität, Rückverfestigungsverlauf und rheologisches Verhalten gezielt verändert werden, so dass eine dauerhaft stabile Position der Rohre auch unter statischen und dynamischen Lasteinwirkungen sichergestellt wird.

Das Verfahren sieht vor, dass das Rohr unter Einsatz mechanischer Verlegetechnik d.h. technischer Hilfsmittel/Werkzeuge außerhalb des Grabens aufgenommen und in diesen eingebracht wird. Als mechanische Verlegetechnik wird dabei vorteilhaft ein Rohrverlegemanipulator eingesetzt, wie er in der DE 10 2006 007 820 beschrieben ist. In einer bevorzugten Ausführungsform wird bereits vor der Aufnahme des Rohres mittels der mechanischen Verlegetechnik mindestens ein Fluchtungsaufsatz auf dem Rohr oder auf oder an geeigneten Fixpunkten, die in exakter Lage zur endgültigen Rohrlage stehen, angebracht. In einer weiteren bevorzugten Ausführungsform ist der Fluchtungsaufsatz an der mechanischen Verlegetechnik angeordnet. Dies hat den Vorteil, dass der Fluchtungsaufsatz nicht mit jedem Rohr neu montiert und ausgerichtet werden muss, setzt jedoch voraus, dass die Rohre jedes Mal mit gleichbleibender Genauigkeit von der mechanischen Verlegetechnik erfasst werden. Der Rohrverlegemanipulator sichert dies dadurch, dass der Teil, der das einzubauende Rohr aufnimmt, auf Grund seiner Funktionalität in der Aufnahmestellung immer die gleiche Position zum einzubauenden Rohr einnimmt und damit die spätere, genaue Positionierung des Rohres im Graben exakt ausführbar macht.

Der Fluchtungsaufsatz funktioniert nach aus dem Stand der Technik bekannten Verfahren, bevorzugt unter Einsatz eines Laserstrahls oder einer Visiervorrichtung mit Kameraausrüstung. Der Fluchtungsaufsatz erzeugt mindestens eine Messlinie, die bevorzugt parallel zur Achse des Rohres, jedoch von dieser beabstandet, über der Wasseroberfläche verläuft. Die Messlinie wird so ausgerichtet, dass sie zwischen dem Fluchtungsaufsatz und einem Bezugspunkt, der in fester Relation zu einem bereits verlegten Rohr, einem Messpunkt oder, im Falle des ersten zu verlegenden Rohres, einem Startpunkt, verläuft.
Mit der erzeugten Messlinie wird aufgrund des vorgegebenen parallelen Verlaufs von Messlinie und Rohrachse auch das Rohr in seiner Gefällelage und Höhe ausgerichtet. Eine bevorzugte Ausführungsform weist mehrere Messlinien auf, die von einem oder mehreren Fluchtungsaufsätzen erzeugt werden. Diese Messlinien müssen nicht parallel zur Rohrachse verlaufen, sondern die Position des Rohres wird aus den bekannten Winkeln der Messlinien zur Rohrachse ermittelt. Dies gilt sowohl für vertikale als auch für axiale Abweichungen der Messlinien von der Rohrachse. Mittels mehrerer, vorteilhaft gleichzeitig überwachter Messlinien ist eine besonders genaue Ausrichtung der Rohre in Richtung der Rohrachse nach Gefälle und Richtung möglich.

Wenn die Ausrichtung der Rohre in der endgültigen Einbauposition erreicht ist, werden die Rohre in dieser Position fixiert. Bevorzugt kommt dazu eine sogenannte Rohrverlegehilfe nach DE 10 2006 013 410 zum Einsatz, die das Rohr vorteilhaft in mindestens einer flexiblen Aufnahme, bevorzugt einer Seilschlaufe, aufnimmt. Gegen ein Aufschwimmen wird das Rohr durch einen von oben wirkenden Stempel, vorteilhaft durch einen Hydraulikstempel, in der Seilschlaufe fixiert. Die Rohrverlegehilfe ist entweder auf der Erdoberfläche fixiert und/oder gegen die Grabenwandung bzw. den Verbau verspreizt. Anstelle der Rohrverlegehilfe sind jedoch auch andere, aus dem Stand der Technik bekannte Vorrichtungen zur Rohrfixierung einsetzbar. Bei instabilen Untergründen muss eine solche Rohrverlegehilfe zusätzlich über eine Messeinrichtung verfügen, mit deren Hilfe der Verlauf der Auftriebskraft, bevorzugt mit deren Aufzeichnung über die Zeit, ausgestattet ist. Damit können vorteilhaft Aussagen zum Verlauf der Rückverfestigung oder zu den Eigenschaftsveränderungen des zeitweise fließfähigen Verfüllbaustoffes, bevorzugt von Flüssigboden nach DE 10 2005 056 568 B4 2009.04.02 oder nach DE 10 2004 023 482 B4 2009.06.04 getroffen und für die Steuerung der Einbautechnologie genutzt werden.

Aus derartigen Messwerten können für den korrekten und schadensfreien Einbau von Rohren, Leitungen usw. im und unter Wasser und auf instabilen Untergründen wichtige Aussagen abgeleitet werden, die der Steuerung des Einbaus des Verfüllmaterials, beispiels-weise der Verfüllgeschwindigkeit und -menge oder der Anpassung des rheologischen Verhaltens des Flüssigbodens an die benötigten Eigenschaften für die spezielle Einbausituation der jeweiligen Baustelle, wie z. B. die Viskosität und das thixotrope Verhalten und damit der Vermeidung von Positionsänderungen der einzubauenden Bauteile und der Optimierung der Einbauleistung dienen.

Die Verbindung des Rohrs zu dem bereits verlegten Vorgängerrohr erfolgt mit bekannten Methoden. Wenn ein oder mehrere Rohre verlegt wurden, wird der Rohrgraben teilweise verfüllt. Dies erfolgt so, dass das Ende des letzten eingebauten Rohres vom zeitweise fließfähigen Verfüllmaterial frei bleibt und weitere Rohre angesetzt werden können.
Vorteilhaft erfolgt das Verfüllen des Einbaubereiches, z.B. eines Rohrgrabens, mit sogenanntem "Flüssigboden" (d. h. temporär fließfähig eingestelltem Boden, beispielsweise nach DE 10 2004 023 482 und der DE 10 2005 056 568). Der Flüssigboden wird in fließfähiger Konsistenz, beginnend bei dem bereits verfüllten Ende des Rohres, in den Graben eingeleitet. Beim Einsatz einer einzelnen Rohrverlegehilfe wird die Ausrichtung des Rohres durch die beiden Fixpunkte der Rohrverlegehilfe und des vorherigen Rohres oder Schachtes gesichert. Wird ein erstes Rohr ohne einen vorher bereits eingebauten Schacht verlegt, werden zwei Rohrverlegehilfen eingesetzt, um die beiden Rohrenden in ihrer Einbauposition stabil zu sichern. Der Flüssigboden fließt als geschlossene Masse in Richtung des offenen Rohrendes und verdrängt dabei das eventuell im Einbaubereich vorhandene Wasser und umschließt das bzw. die Rohre vollständig. Dabei kann die Verfüllung des jeweiligen Rohrgrabens oder der Baugrube entweder in einzelnen Abschnitten, beispielsweise durch geeignete technische Hilfsmittel, z. B. für die Rohre ausgestellte Schotten erfolgen oder in Abschnitten, bei denen sich der Flüssigboden von einem Einbauort weg fließend in einer keilförmigen Art über die Rohr ein deren Längsrichtung verteilt.
Aufgrund des speziellen Rückverfestigungsverhaltens des Flüssigbodens und der damit einhergehenden beschleunigten Erhöhung der Viskosität, die durch die schnell voranschreitende Rückverfestigung weiter erhöht wird, entsteht schnelle Stabilität der Lage der eingebauten Rohre, Leitungen oder anderen Einbauteile.

Auch die Schubbelastungen aus der Bebauung, die in die Wand des Rohrgrabens oder der Baugrube eingeleitet werden, können durch dieses spezielle Verhalten von Flüssigboden nach den zitierten Patentschriften sehr schnell und in deutlich höherem Maße als bei bekannten Stützwandflüssigkeiten durch den Flüssigboden aufgenommen werden. Damit kann schnell auf eventuell eingesetzten Verbau verzichtet, dessen einzusetzende Art vereinfacht und die stabile Einbauposition der jeweiligen Rohre, Leitungen oder anderen Einbauteile sicher gewährleistet werden.

In er bevorzugten Ausführungsform wird im Einbaubereich, z. B. in einem Rohrgraben, an der Stelle, bis zu der der Graben verfüllt werden soll, ein Querschott gesetzt und das zeitweise fließfähige Verfüllmaterial, vorzugsweise der Flüssigboden, bis zu seiner vorgesehenen Verfüllhöhe eingebracht.

Bereits kurze Zeit nach der Verfüllung mit Flüssigboden kann mit der Ausführung der Oberflächenabdeckung bzw. mit dem Fahrbahnaufbau begonnen werden. Bei Einsatz von Flüssigboden kann bereits nach oft weniger als einer Stunde das im Bereich des Straßenunterbaus benötigte Verfüllmaterial aufgebracht und somit der Verfüllbereich mechanisch belastet werden (z. B. beim Überschreiten von Personen oder der Sicherung der Nutzbarkeit einer Gebäudezufahrt). Der Flüssigboden ist dann bereits soweit erstarrt, dass der Verbau des Grabens, z.B. Verbauboxen, oder ähnliches gezogen werden können und diese Vorrichtungen wieder zum erneuten Einsatz zur Verfügung stehen. Auf diese Weise entsteht vorteilhaft eine fortschreitende, "getaktete" Baustelle geringen Ausmaßes (geringe freie Grabenlänge) und damit geringere Behinderungen für die Anwohner und den Verkehr, die alle technologisch notwendigen Arbeitsschritte (Grabenaushub, Rohrpositionierung, Rohrfixierung, Rohrmontage, Verfüllung der Grabenbereiche, in denen bereits montierte Rohre liegen), einschließt.

Vorteilhaft ist insbesondere, dass für die Rohrpositionierung, -fixierung und -montage keine Person den Einbaubereich, insbesondere einen Rohrgraben, betreten muss. Der Rohrgraben kann daher schmaler ausgeführt werden, als nach dem Stand der Technik üblich.

Im folgenden Ausführungsbeispiel wird eine Variante des erfindungsgemäßen Verfahrens beschrieben, ohne den Schutzbereich jedoch auf diese Ausführungsform zu beschränken.

An ein Schachtbauwerk (1) ist eine Rohrleitung (9) anzuschließen. Es wird daher ein Rohrgraben, beginnend bei dem Rohranschluss des Schachtbauwerkes, ausgehoben. Der Grundwasserspiegel (2) liegt deutlich oberhalb der Verlegetiefe der Rohre (9). Daher füllt sich der Rohrgraben im Laufe der Baumaßnahme bis zur Höhe des Grundwasserhorizonts (2) mit Wasser.

Der Verbau des Rohrgrabens wird mit drei Standardverbauboxen (3) 3,00m x 2,60m realisiert, die mit einem Abstand (d) von 0,15m bis 0,2m voneinander in den graben eingezetzt werden.

Nach diesen drei Standardverbauboxen (3) wird eine kürzere Standardverbaubox (3) von 2,50m x 3,00m eingesetzt, um das Standardrastermaß einzuhalten.

Jedes Rohr (9) wird so installiert, dass es in seiner überwiegenden Länge in einer Standardverbaubox (3) zu liegen kommt, jedoch in den Abschnitt der nächsten Standardverbaubox (3) hineinragt. Der weitere Aushub des Rohrgrabens und sein Verbau werden kontinuierlich fortgeführt.

Ein erstes Anschlussrohr (9) wird an das Schachtbauwerk (1) angesetzt. Dieses Anschlussrohr (9) ist kürzer, als die, im weiteren Verlauf verlegten Rohre (9), ein sogenanntes "Gelenkstück" Es besteht auch die Möglichkeit, auf ein solches Gelenkstück bei Einsatz der hier geschilderten Verfahrens und von Flüssigboden nach den beiden vorgenannten Patenten zu verzichten, da Rohr und Schacht bei Verwendung von Flüssigboden kein unterschiedliches Setzungsverhalten mehr aufweisen.

Das Anschlussrohr (9) wird in einer Rohrverlegehilfe (4) fixiert. Die Rohrverlegehilfe (4) weist eine Seilschlinge (6) auf, in der das Anschlussrohr (9) ruht. Ein Aufschwimmen des Anschlussrohrs (9) wird durch einen hydraulischen Stempel (5) verhindert, der das Anschlussrohr (9) in der Seilschlinge fixiert. Der entstehende Auftriebsdruck des Rohres (9) wird mit einer hydraulischen Messeinrichtung am hydraulischen Stempel (5) erfasst.

Auf dem Rohr (9) wird ein Fluchtungsaufsatz (8) montiert. Das Rohr (9) wird nun in den Zwischenraum (d) zwischen den beiden folgenden Standardverbauboxen (3) durch eine weitere Rohrverlegehilfe (4) eingebracht und dort fixiert. Sie wird zur Aufnahme des nächsten Rohres (10) vorbereitet. Das nächste Rohr (10) wird außerhalb des Rohrgrabens bereitgestellt. Nunmehr wird es mit einer mechanischen Verlegeeinrichtung erfasst. Dazu wird ein Rohrverlegemanipulator (7) verwendet. Dieser Rohrverlegemanipulator (7) weist einen langgestreckten Arm (7b) auf, der in das Innere des Rohres (10) eingeführt wird und dort an zwei beabstandeten Positionen jeweils vier Halteelemente (7c) ausspreizt, die das Rohr (10) in einer stabilen Lage zum Rohrverlegemanipulator (7) fixieren. Der Rohrverlegemanipulator (7) ist an einem Baggerausleger befestigt und das Rohr (10) wird von diesem in den Graben gehoben.

Der Rohrverlegemanipulator (7) schiebt das Rohr (10) in die vorbereitete Seilschlinge (6) und nach seiner Ausrichtung in der Rohrachse in das Verbindungselement des vorherigen Rohres (Muffenende oder Rohrschelle). Nach der Positionierung des Rohres in der Seilschlaufe und einer groben Ausrichtung in der Richtung der Rohrachse wird zur Feinpositionierung auch dieses Rohr (10) mit einem Fluchtungsaufsatz (8) versehen. Das Rohr (10) wird nun mit dem Rohrverlegemanipulator (7) und unter Nutzung der Angaben des Fluchtungsaufsatzes (8) endgültig ausgerichtet und dann in die endgültige Position der Rohrverbindung (z.B. gegen einen Anschlag in einer Muffe) geschoben. Die dabei nötigen Kräfte werden am Rohrverlegemanipulator (7) auf die jeweiligen Rohrart angepasst und so eingestellt, dass eine Zerstörung des Rohres beim Verbinden der zwei Rohre sicher vermieden wird.

Der Fluchtungsaufsatz (8) auf dem zu verlegenden Rohr (10) bestimmt die Position des Rohres im Verhältnis zum Fluchtungsaufsatz (8) auf dem bereits verlegten Rohr (9). Wenn das Rohr (10) die vorgesehene Position erreicht hat, fixieren die Seilschlinge (6) und der hydraulische Stempel (5) sowie die Verbindung mit dem vorher eingebauten Rohr das neu verlegte Rohr (10) in dieser Lage.

Nunmehr werden die Halteelemente (7c) des Rohrverlegemanipulators (7) gelöst und dieser von dem Rohr (10) weg und aus dem Rohrgraben geführt. Diese Arbeiten werden von außerhalb des Rohrgrabens gesteuert und bedürfen keiner Arbeitskräfte im Graben. Nach dem Fixieren des Rohres (10) wird der Fluchtungsaufsatz (8) des soeben verlegten Rohres (10) und des davor bereits verlegten Rohres (9) entfernt. Der Fluchtungsaufsatz (8) wird in der Nähe des offenen Endes des soeben verlegten Rohres (10) neu aufgesetzt. Der Fluchtungsaufsatz (8) des soeben verlegten Rohres (10) kann auch auf diesem belassen und bei Bedarf in die benötigte neue Position (z. B. im Fall der Positionierung eines den Rohrgraben abteilenden Querschottes an der alten Befestigungsstelle) versetzt werden.

Alternativ kann statt der zwei Fluchtungsaufsätze (8) auf den Rohren mit einem Fluchtungsaufsatz (8) am Rohrverlegemanipulator (7) gearbeitet werden, der über der Wasseroberfläche parallel zur Rohrachse positioniert wird. Dies geschieht dergestalt, dass dieser Fluchtaufsatz einen, am Graben ihm gegenüber in der Lage der Rohrachse höhenmäßig über der Wasseroberfläche (z. B. auf Straßenebene und am letzten Schacht) fluchtend positionierten Laser erfasst und damit den Rohrverlegemanipulator bei dieser Erfassung des Lasers an ihm ausrichtet. Diese Ausrichtung führt damit zur Positionierung des vom Rohrverlegemanipulator aufgenommenen und neu zu verlegenden Rohres in der Lage der Rohrachse.

Es wird nun ein Querschott (11) in jenen Zwischenraum (d) zwischen zwei Verbauboxen (3) eingesetzt, der dem Ende des soeben installierten Rohres (10) am nächsten ist. Anschließend erfolgt die Verfüllung des Grabenabschnittes, der dem des soeben verlegten Rohres (10) vorangegangen ist. Da der Querschott (11) den Raum unterhalb des Rohres (10) in einer bevorzugten Variante nicht abschließt, wird das Wasser in diesem Fall aus der verfüllten Verbaubox (3) verdrängt. Es kann auch immer ein Anteil (12a) des eingefüllten Flüssigbodens (12) in den nächsten Abschnitt vorausfließen. Dadurch, dass nicht der, des soeben installierten, sondern der Grabenabschnitt des davor installierten Rohres (9) verfüllt wird, dringt zwar Flüssigboden (12a) in den Abschnitt des soeben installierten Rohres (10) vor, füllt diesen jedoch nicht aus. Das Rohrende, an das ein weiteres Rohr (10) angesetzt werden soll, bleibt daher frei von Flüssigboden (12).

Da der Flüssigboden (12) innerhalb kurzer Zeit (ca. 2 Stunden) soweit verfestigt, dass der weitere Oberflächenaufbau (14) fortgesetzt werden kann, wird nun die Verbaubox (3) des Abschnittes, der dem vorangeht, der soeben verfüllt wurde, gezogen. Ebenso wird die Rohrverlegehilfe (4), die das Rohr (9) in diesem Abschnitt fixiert hatte, entfernt und in den Bereich des nächsten einzubauenden Rohres direkt umgesetzt. Der Oberflächenaufbau (14) in dem verfüllten Abschnitt kann nun fortgesetzt werden. Die Verbaubox (3) und die Rohrverlegehilfe (4) stehen für den nächsten Grabenabschnitt zur Verfügung, der während der Rohrverlegearbeiten bereits ausgehoben wurde.

Erstmals sind die Arbeiten der Verfüllung und des Grabenaushubes nicht mehr direkt technologisch miteinander zwingend in einer Weise gekoppelt, dass Wartezeiten infolge unterschiedlicher Leistungen bei Aushub und Verfüllung entstehen müssen. Durch diese technologische Entkopplung muss der eingesetzte Bagger nicht mehr auf den Einbau des Verfüllmaterials warten. Da die Verfüllung in der Regel bei Einsatz von Flüssigboden und optimierter Einbautechnologie schneller erfolgt als ein Bagger ausheben kann, entfallen die bisher üblichen Warte- und damit Stillstandszeiten für diese teure Technik. Zudem kann die Arbeitsleistung deutlich gesteigert werden. Auf diese Weise entspricht auch die Länge des offenen Baustellenbereichs lediglich der von in der Regel drei (maximal in Sondersituationen oder bei anderen Rohrlängen, bei Querungen vieler Leitungen, etc. von vier bzw. fünf) Standardverbauboxen (3).

### Figuren

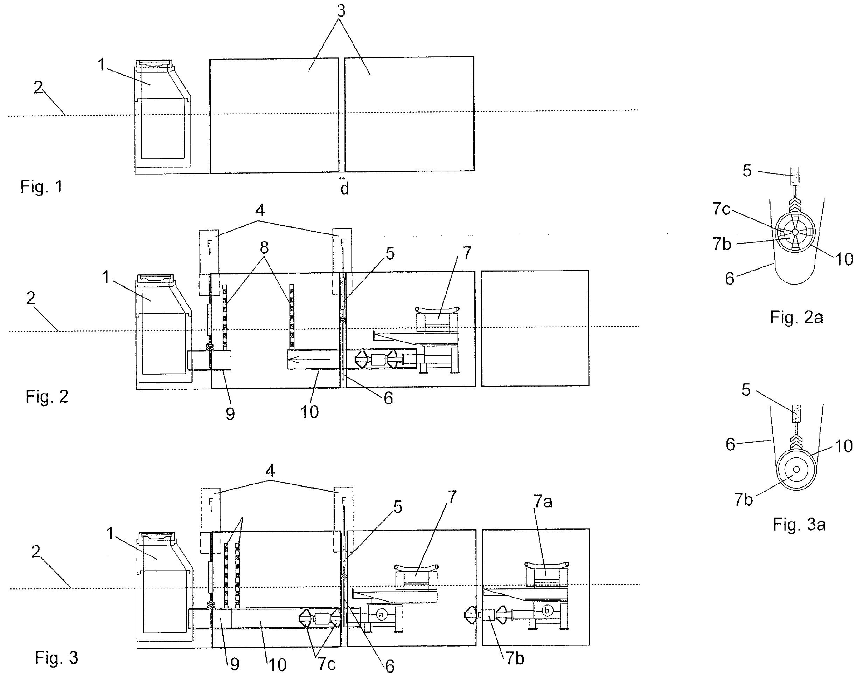

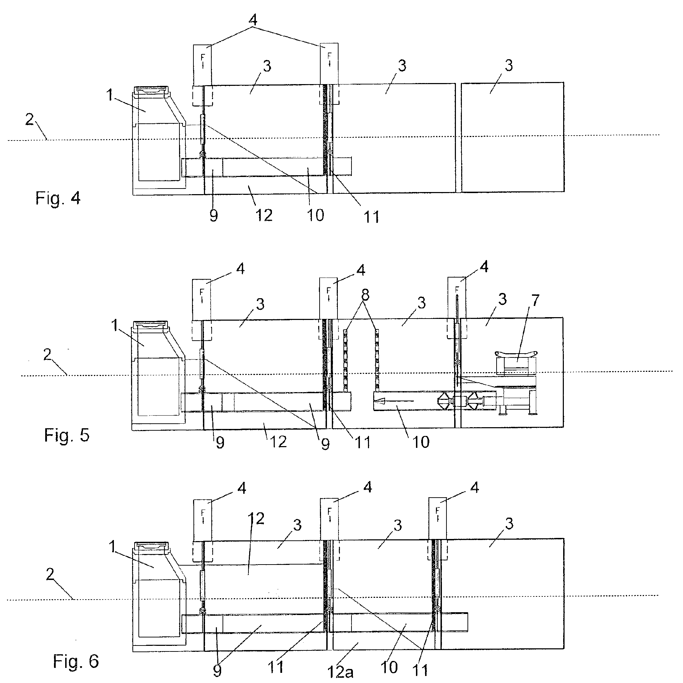

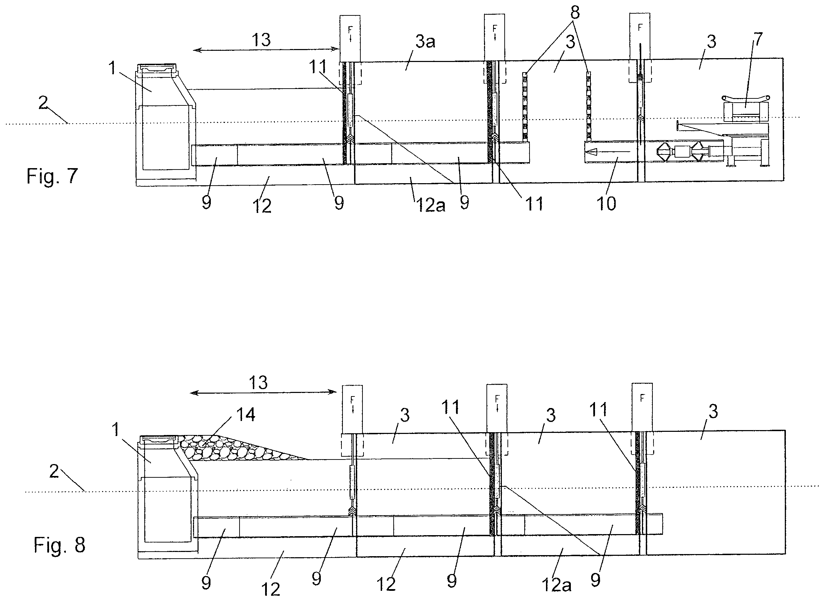

Die Figuren 1 bis 8 zeigen einen beispielhaften Ablauf des erfindungsgemäßen Verfahrens, ohne den Schutzbereich auf diesen Ablauf zu beschränken.
**Fig. 1****:** An das Schachtbauwerk (1) soll eine Rohrleitung unterhalb des Grundwasserspiegels (2) angeschlossen werden. Es werden zwei Standardverbauboxen (3) in einem Rohrgraben gesetzt. Die Boxen haben einen Abstand (d) zueinander.
**Fig. 2** zeigt, wie nach dem Einbau des Anschlussrohres (9) ein weiteres Rohr (10) montiert wird. Das Anschlussrohr (9) wird hier ebenfalls von einer Verlegehilfe (4) in seiner Position fixiert. Das Rohr (10) wird mit einem Rohrverlegemanipulator (7) in die Schlaufe des Seiles (6)der Rohrverlegehilfe (4) eingeführt. Sowohl das Anschlussrohr (9) als auch das zu montierende Rohr (10) tragen Fluchtungsaufsätze, die zur Positionierung des Rohres (10) zu dem Anschlussrohr (9) dienen.
**Fig. 2a** zeigt, wie das Rohr (10) von dem Arm (7b) des Rohrverlegemanipulators (7) durch dessen Halteelemente (7c) gehalten und in die Seilschlinge (6) der Rohrverlegehilfe (4) eingeführt wird. Der Hydraulikstempel (5) begrenzt die Bewegung des Rohres (10) nach oben, kann aber auch erst später in diese Position geführt werden.
**Fig. 3** stellt dar, wie das Rohr (10) an das Anschlussrohr (9) angefügt und das Rohr (10) durch die Rohrverlegehilfe (4) in seiner Einbauposition fixiert wird. Der Rohrverlege-manipulator (7a) ist nach der Freigabe des Rohres (10) von diesem zurückgezogen.
**Fig. 3a** zeigt, wie das Rohr (10) von Hydraulikstempel (5) und nunmehr zugezogener Seilschlinge (6) in der Einbauposition stabil gehalten wird. Der Arm (7b) des Rohrverlegemanipulators hat seine Halteelemente gelöst (daher hier nicht mehr dargestellt).
**Fig. 4** zeigt, wie eine erste Teilverfüllung mit Flüssigboden (12) in der Nähe des Schachtbauwerkes erfolgt ist. Darüber hinaus wurde in den Zwischenraum zwischen den beiden Standardverbauboxen (3) ein Querschott (11) eingefügt.
**Fig. 5** zeigt, wie das nächste Rohr (10) analog zum Vorgehen in Fig. 2 an den vorhandenen Rohrstrang (9) angesetzt wird.
**Fig. 6** stellt dar, wie der Verbauabschnitt (13) des vorhergehenden Rohres mit Flüssigboden (12) verfüllt wird. Beim Verfüllen wird das im Einbaubereich vorzugsweise im Rohrgraben befindliche Wasser weiter verdrängt. Da der Querschott (11) in dieser Variante des Verfahrens nicht bis unter das Rohr (9) reicht, strömt ein geringer Teil des Flüssigbodens (12a) in den folgenden Abschnitt über, wo er jedoch bald verfestigt.
**Fig. 7** zeigt, wie das nächste Rohr (10) an den Rohrstrang (9) mit derselben Vorgehensweise wie in Fig. 2 und Fig. 5 angesetzt wird. Im ersten Verbauabschnitt (13) wurden bereits die Standardverbauboxen (3) gezogen.
**Fig. 8** stellt dar, wie nunmehr auch der nächste Verbauabschnitt mit Flüssigboden (12) aufgefüllt wurde. Im Verbauabschnitt des soeben eingebauten Rohres hat sich wieder der Keil von Flüssigboden (12a) gebildet, der unter dem Querschott (11) durchgeströmt ist. Im Verbauabschnitt (13) unmittelbar am Schachtbauwerk wird bereits mit dem Aufbau der Oberflächenabdeckung (14) begonnen.

Während des gesamten Ablaufs wird der Grabenaushub in Verlegerichtung vorangetrieben, ohne dabei die Gesamtlänge des offenen und damit z. B. Anwohner oder Verkehrsteilnehmer behindernden Grabens zu erhöhen.

### Bezugszeichenliste

- 1: Schachtbauwerk
- 2: Grundwasserspiegel
- 3: Standardverbaubox
- 3a: zu verfüllender Abschnitt
- 4: Rohrverlegehilfe
- 5: hydraulischer Stempel der Rohrverlegehilfe
- 6: Seilschlinge der Rohrverlegehilfe
- 7: Rohrverlegemanipulator im Betriebszustand
- 7a: Rohrverlegemanipulator nach dem Positionieren des Rohres
- 7b: Arm des Rohrverlegemanipulators
- 7c: Halteelemente des Arms des Rohrverlegemanipulators
- 8: Fluchtungsaufsatz
- 9: Anschlussrohr am Schachtbauwerk bzw. bereits eingebaute Rohre
- 10: Rohr, das soeben eingebaut wird
- 11: Querschott
- 12: Flüssigboden
- 12a: in den nächsten Abschnitt vorgeflossener Flüssigboden
- 13: Abschnitt, in dem die Standardverbaubox bereits gezogen wurde
- 14: Beginn des Oberflächenaufbaus

- d: Abstand zwischen zwei Standardverbauboxen 3
- F: Durch die Rohrverlegehilfe ausgeübte Kraft

## Patentansprüche

1. Verfahren zur Verlegung von Rohren (9, 10) und/oder Leitungen in Einbaubereichen, die in Rohrgräben, auch auf mechanisch nicht tragfähigen Böden,
a) in Einbaubereichen, die teilweise oder vollständig unter Wasser (2) liegen, wobei vor Einbringung der Rohre (8, 9) in die Einbaubereiche an den Rohren (8, 9) oder
b) in Einbaubereichen, die vollständig unter Wasser (2) liegen, an der zur Positionierung der Rohre genutzten mechanischen Verlegetechnik (7) oder
c) in Einbaubereichen, die teilweise oder vollständig unter Wasser (2) liegen, wobei vor Einbringung der Rohre (8, 9) in die Einbaubereiche an den Rohren (8, 9) und an der zur Positionierung der Rohre genutzten mechanischen Verlegetechnik (7)
ein oder mehrere Fluchtungsaufsätze (8) zur Erzeugung von jeweils mindestens einer Messlinie, die über der Wasseroberfläche verläuft, angeordnet werden und die Rohre (9, 10) unter Einsatz der mechanischen Verlegetechnik (7) mit gleichbleibender Genauigkeit von dieser erfasst und in ihrer Einbaulage positioniert werden, wobei die Fluchtungsaufsätze über die Wasseroberfläche (2) hinausragen und die Lage des Rohres (10) im Graben in Relation zu der nächstliegenden bereits fixierten Rohrleitung (9) und deren Rohrachse angeben, wobei die Rohre (10) aufgrund der Ausrichtung der mindestens einen Messlinie der Fluchtungsaufsätze (8) in ihrer Gefällelage und Höhe ausgerichtet und in ihrer endgültigen Einbauposition fixiert werden und der Graben anschließend mit fließfähigem Verfüllbaustoff verfüllt wird.

2. Verfahren nach Anspruch 1, **dadurch gekennzeichnet, dass** der eingesetzte fließfähige Verfüllbaustoff ein Flüssigboden (12) ist und dieser in seinen, für die Arbeit auf instabilen Untergründen und/oder im oder unter Wasser relevanten Eigenschaften Dichte, Volumenstabilität, Konsistenz, Rückverfestigungsverhalten und/oder rheologisches Verhalten so eingestellt wird, dass die Einbauposition der Rohre (9, 10) unter statischer und dynamischer Lasteinwirkung dauerhaft stabil gehalten wird.

3. Verfahren nach Anspruch 1, **dadurch gekennzeichnet, dass** als Verlegetechnik (7) ein Rohrverlegemanipulator (7) verwendet wird.

4. Verfahren nach Anspruch 1, **dadurch gekennzeichnet, dass** als Verlegetechnik (7) ein Rohrverlegemanipulator (7) verwendet wird, der einen Fluchtungsaufsatz (8) zur Ausrichtung des Rohres (9, 10) in der Rohrachse und der geforderten Einbauhöhe aufweist, ohne auf die Rohre (9, 10) mit dem gleichen Ziel Fluchtungsaufsätze (8) zu positionieren.

5. Verfahren nach Anspruch 1, **dadurch gekennzeichnet, dass** als Verlegetechnik (7) ein Rohrverlegemanipulator verwendet wird, der beim Einsatz unter Wasser eine Sensorik aufweist.

6. Verfahren nach Anspruch 1 oder 2, **dadurch gekennzeichnet, dass** zum Fixieren der Rohre (10) in ihrer Einbauposition eine Rohrverlegehilfe (4) verwendet wird.

7. Verfahren nach einem der Ansprüche 1 oder 6, **dadurch gekennzeichnet, dass** zum Fixieren der Rohre (10) in ihrer Einbauposition eine Rohrverlegehilfe (4) mit einer Messeinrichtung zur Bestimmung der Größe und/oder des Verlaufes der Auftriebskraft verwendet wird.

8. Verfahren nach einem der vorhergehenden Ansprüche, **dadurch gekennzeichnet, dass** zum Fixieren der Rohre (10) in ihrer Einbauposition eine Rohrverlegehilfe (4) verwendet wird, die eine Sensorik zur Erfassung von Informationen über die Lage des fixierten Rohres (9) aufweist.

9. Verfahren nach einem der vorhergehenden Ansprüche, **dadurch gekennzeichnet, dass** der Einbaubereich abschnittsweise mit Flüssigboden (12) verfüllt wird.

10. Verfahren nach einem der vorhergehenden Ansprüche, **dadurch gekennzeichnet, dass** jeweils der Einbaubereich der Rohre bzw. der Rohrgraben (13) mit dem vorletzten verlegten Rohr (9) verfüllt wird.

11. Verfahren nach einem der vorhergehenden Ansprüche, **dadurch gekennzeichnet, dass** Fluchtungsaufsätze (8) verwendet werden, die eine oder mehrere unterschiedliche Messlinien zu Fixpunkten außerhalb und/oder innerhalb des Einbaubereiches, erzeugen, die in horizontaler und/oder vertikaler Richtung mit der Rohrachse zusammenfallen oder von ihr abweichen.

## Claims

1. A method for laying pipes (9, 10) and/or lines in installation areas that lie in pipe trenches, to include mechanically unstable ground, wherein,
a) in installation areas lying partially or completely underwater (2), wherein before the pipes (8, 9) are introduced into the installation areas, the pipes (8, 9), or
b) in installation areas lying completely underwater (2), the mechanical laying equipment (7) used to position the pipes, or
c) in installation areas lying partially or completely underwater (2), wherein before the pipes (8, 9) are introduced into the installation areas, the pipes (8, 9) and the mechanical laying equipment (7) used to position the pipes
have arranged on them one or more alignment attachments (8) for generating a respective at least one measuring line that runs over the water surface, and the mechanical laying equipment (7) is used to acquire the pipes (9, 10) at a constant accuracy and position them in their installation position, wherein the alignment attachments protrude over the water surface (2), and indicate the position of the pipe (10) in the trench in relation to the next, already fixed pipe (9) and its pipe axis, wherein the pipes (10) are aligned in their gradient and height owing to the alignment of the at least one measuring line of the alignment attachments (8), and are fixed in their final installation position, after which the trench is filled with a flowable backfill materials.

2. The method according to claim 1, **characterized in that** the used flowable backfill material is a liquid soil (12), and the latter is adjusted in terms of its properties relevant for operations on unstable substrates and/or in water or underwater, i.e., density, volume stability, consistency, reconsolidation behavior and/or rheological behavior, in such a way that the installation position of the pipes (9, 10) is kept durably stable during exposure to a static and dynamic load.

3. The method according to claim 1, **characterized in that** a pipe laying manipulator is used as the laying equipment (7).

4. The method according to claim 1, **characterized in that** a pipe laying manipulator (7) is used as the laying equipment (7), which exhibits an alignment attachment (8) for aligning the pipe (9, 10) in the pipe axis and required height without positioning alignment attachments (8) on the pipes (9, 10) with the same objective.

5. The method according to claim 1, **characterized in that** a pipe laying manipulator is used as the laying equipment (7), which exhibits sensors when used underwater.

6. The method according to claim 1 or 2, **characterized in that** a pipe laying aid (4) is used to fix the pipes (10) in their installation position.

7. The method according to one of claims 1 or 6, **characterized in that** a pipe laying aid (4) with a measuring device for determining the size and/or progression of buoyancy is used to fix the pipes (10) in their installation position.

8. The method according to one of the preceding claims, **characterized in that** a pipe laying aid (4) that exhibits sensors for acquiring information about the position of the fixed pipe (9) is used to fix the pipes (10) in their installation position.

9. The method according to one of the preceding claims, **characterized in that** sections of the installation area are filled with liquid soil (12).

10. The method according to one of the preceding claims, **characterized in that** the respective installation area of the pipes or pipe trenches (13) is filled with the next-to-last laid pipe (9).

11. The method according to one of the preceding claims, **characterized in that** alignment attachments (8) are used that generate one or more different measuring lines for fixed points outside and/or inside the installation area, which converge with or deviate from the pipe axis in a horizontal and/or vertical direction.

## Revendications

1. Procédé pour la pose de tuyaux (9, 10) et/ou de conduites dans des zones de pose se situant dans des tranchées, également sur des sols mécaniquement non porteurs,
a) dans des zones de pose qui se situent partiellement ou complètement sous l'eau (2), dans lequel, avant la mise en place des tuyaux (8, 9) dans les zones de pose, on met en place sur les tuyaux (8, 9), ou
b) dans des zones de pose qui se situent complètement sous l'eau (2), on met en place sur la technique de pose mécanique (7) utilisée pour le positionnement des tuyaux ou
c) dans des zones de pose qui se situent partiellement ou complètement sous l'eau (2), dans lequel, avant la mise en place des tuyaux (8, 9) dans les zones de pose, on met en place sur les tuyaux (8, 9) et sur la technique de pose mécanique (7) utilisée pour le positionnement des tuyaux,
une ou plusieurs rehausses d'alignement (8) pour produire respectivement au moins une ligne de mesure qui s'étend au-dessus de la surface de l'eau, et grâce à l'utilisation de la technique de pose mécanique (7), les tuyaux (9, 10) étant détectés par celle-ci avec une exactitude demeurant constante et étant positionnés dans leur position de pose, dans lequel les rehausses d'alignement dépassent de la surface de l'eau (2) et indiquent la position du tuyau (10) dans le fossé en rapport avec la conduite la plus proche (9) déjà fixée et l'axe de tuyau de celle-ci, dans lequel, du fait de l'orientation de cette au moins une ligne de mesure des rehausses d'alignement (8), les tuyaux (10) sont orientés dans leur position de pente et hauteur et sont fixés dans leur position de pose définitive et le fossé étant ensuite comblé avec du remblais à écoulement libre.

2. Procédé selon la revendication 1, **caractérisé en ce que** le remblais à écoulement libre utilisé est un sol liquide (12) et **en ce que** celui-ci est normalisé en ce qui concerne ses propriétés pertinentes de densité, stabilité volumique, consistance, comportement de rappuyage et/ou comportement rhéologique pour le travail sur des sous-sols instables et/ou dans l'eau ou sous l'eau de telle sorte que la position de pose des tuyaux (9, 10) est maintenue stable de manière durable sous l'effet d'une charge statique et dynamique.

3. Procédé selon la revendication 1, **caractérisé en ce que** l'on utilise un manipulateur de pose de tuyaux (7) en guise de technique de pose (7).

4. Procédé selon la revendication 1, **caractérisé en ce que** l'on utilise un manipulateur de pose de tuyaux (7) en guise de technique de pose (7), lequel présente une rehausse d'alignement (8) pour l'orientation du tuyau (9, 10) dans l'axe de tuyau et la hauteur de pose exigée sans positionner des rehausses d'alignement (8) sur les tuyaux (9, 10) dans le même but.

5. Procédé selon la revendication 1, **caractérisé en ce que** l'on utilise un manipulateur de pose de tuyaux en guise de technique de pose (7), lequel présente des capteurs lors de l'utilisation sous l'eau.

6. Procédé selon la revendication 1 ou 2, **caractérisé en ce que**, pour la fixation des tuyaux (10) dans leur position de pose, on utilise un dispositif d'aide à la pose (4).

7. Procédé selon l'une des revendications 1 ou 6, **caractérisé en ce que**, pour la fixation des tuyaux (10) dans leur position de pose, on utilise un dispositif d'aide à la pose (4) avec un dispositif de mesure pour la détermination de l'ampleur et/ou de la courbe de la force ascensionnelle.

8. Procédé selon l'une des revendications précédentes, **caractérisé en ce que**, pour la fixation des tuyaux (10) dans leur position de pose, on utilise un dispositif d'aide à la pose (4) qui présente des capteur pour la détection d'informations sur la position du tuyau (9) fixé.

9. Procédé selon l'une des revendications précédentes, **caractérisé en ce que** la zone de pose est partiellement comblée avec un sol liquide (12).

10. Procédé selon l'une des revendications précédentes, **caractérisé en ce que** respectivement la zone de pose des tuyaux ou la tranchée (13) est remplie avec l'avant-dernier tuyau (9) posé.

11. Procédé selon l'une des revendications précédentes, **caractérisé en ce que** l'on utilise des rehausses d'alignement (8), lesquelles produisent une ou plusieurs lignes de mesure différentes par rapport à des points fixes à l'extérieur et/ou à l'intérieur de la zone de pose, lesquelles coïncident avec l'axe de tuyau ou s'écartent de celui-ci en direction horizontale et/ou verticale.
